# EUROPEAN PATENT SPECIFICATION

(11) **EP 4 201 906 B1**
(45) Date of publication and mention of the grant of the patent: **05.08.2026**
(21) Application number: 22760024.4
(22) Date of filing: 22.02.2022
(51) Int. Cl.: C03C 17/34, C03C 17/00

(54) **COLOR PANEL, HOME APPLIANCE AND METHOD FOR MANUFACTURING COLOR PANEL**
FARBTAFEL, HAUSHALTSGERÄT UND VERFAHREN ZUR HERSTELLUNG EINER FARBTAFEL
PANNEAU COLORÉ, APPAREIL DOMESTIQUE ET PROCÉDÉ DE FABRICATION DE PANNEAU COLORÉ

(30) Priority: 23.02.2021 KR 20210024326; 30.03.2021 KR 20210041470
(43) Date of publication of application: 28.06.2023
(73) Proprietor: Samsung Electronics Co., Ltd., Suwon-si, Gyeonggi-do 16677 (KR)
(72) Inventor: LEE, Minkyung, Suwon-si Gyeonggi-do 16677 (KR); KOH, Youngdeog, Suwon-si Gyeonggi-do 16677 (KR); KIM, Kwangjoo, Suwon-si Gyeonggi-do 16677 (KR); KIM, Choongkeon, Suwon-si Gyeonggi-do 16677 (KR); BYEON, Dahyun, Suwon-si Gyeonggi-do 16677 (KR)
(74) Representative: Gulde & Partner
(86) International application number: PCT/KR2022/002612
(87) International publication number: WO 2022/182108

(56) References cited:
- KR-A- 20090 106 794
- KR-A- 20110 041 794
- KR-A- 20150 025 657
- KR-A- 20170 126 580
- KR-B1- 100 845 639
- US-A1- 2012 121 832
- US-A1- 2019 315 991

## Description

### [Technical Field]

The present disclosure relates to a color panel used in home appliances, a home appliance including the same, and a method of manufacturing the color panel.

### [Background Art]

Home appliances such as refrigerators, clothes care apparatuses, dishwashers, and cooking apparatus generally include a main body to contain an object to be treated and a door to open and close the main body.

For example, a refrigerator is an apparatus for keeping food fresh by including a main body including storage compartments and a cooling air supply system configured to supply cooling air to the storage compartments. The storage compartments include a refrigerating compartment maintained at a temperature of approximately 0°C to 5°C to keep food in a refrigerated state and a freezing compartment maintained at a temperature of approximately -30°C to 0°C to keep food in a frozen state. In general, a storage compartment is provided such that a front side is opened to put and take food into/out of the storage compartment, and the open front side of the storage compartment is closed by a door.

In either case where a home appliance is used or not used, the most often visible part to a user is a door or other panels defining the appearance. Accordingly, it is expected to improve aesthetic satisfaction of a user when a color of a panel is realized in accordance with a user's taste.

US 2019/315991 A1 discloses a method for producing an appliance component. The appliance component comprises an operational front side and back side and has a substrate made of thermally tempered flat glass with a coating.

US 2012/1 21 832 A1 discloses a decoration panel and a home appliance equipped with the decoration panel. The decoration panel includes a green glass, a first film disposed on a rear side of the green glass and a base supporting layer supporting the first film from a rear side of the first film. The first film includes a first base layer formed on the rear side of the green glass, a printed layer formed on a rear side of the first base layer by gravure printing and a first reflective layer printed with a print ink containing a white inorganic pigment on a rear side of the printed layer by gravure printing to shield the green color of the green glass.

KR 100 845 639 B1 discloses a multilayer decorative material for the cladding of interior and exterior walls and floors of architectural structures and secondly as a decorative panel material for furniture such as closets, cabinets and built-in wardrobes, various doors for entering and exiting a house or building and for designing the appearance of household appliances such as water purifiers, refrigerators and washing machines.

KR 2011 0041794 A describes transparent decorative plates with metallic texture having a digital printing layer comprising a transparent plate, an adhesive layer, a printing layer, an ink housing layer, a coating layer for achieving metallic effects, a barrier layer, a material layer and a backside treatment layer.

### [Disclosure]

### [Technical Problem]

The present disclosure provides a color panel having a customized color, a home appliance including the same, and a method of manufacturing the color panel.

### [Technical Solution]

One aspect of the present disclosure provides a color panel including a transparent substrate, a color layer having a color and disposed on a rear side of the transparent substrate so that the color is viewable through the transparent substrate, a first transparent layer formed between the color layer and the transparent substrate to adhere a front side of the color layer to a rear side of the transparent substrate, a white layer formed on the color layer to provide a background color for the color layer and a concealing layer directly disposed on a rear side of the white layer, wherein the concealing layer has a white color or a gray color.

The color panel may further include a second transparent layer configured to prevent the color of the color layer from changing, where the transparent layer is a first transparent layer and the second transparent layer formed between the color layer and the white layer.

The color panel further includes a concealing layer formed on the white layer, wherein the concealing layer has a white color or a gray color.

The white layer may have a white color satisfying L*= 90 to 100, a*= -5.0 to 5.0, and b*= -5 to 5 (where L* is brightness and a* and b* are chromaticity) in the CIE LAB color space.

The color layer may be formed by digital printing.

The color layer may be formed by inkjet printing.

The color layer may include an ink ejected from an inkjet printing device.

The color layer may include an ink ejected from the inkjet printing device and cured by UV light.

The color layer may include a toner ejected from a laser printing device.

The transparent substrate may include a transparent glass, the first transparent layer may include a polyester-based transparent ink, and the white layer may include a polyacryl-based white ink.

Another aspect of the present disclosure provides a home appliance including a main body, and a door to open and close the main body, wherein a color panel included in at least one of the main body and the door, and the color panel includes a transparent substrate disposed on a front side of the color panel, a color layer having a color and disposed on a rear side of the transparent substrate so that the color is viewable through the transparent substrate, a first transparent layer formed between the color layer and the transparent substrate to adhere a front side of the color layer to the substrate, a white layer formed on a rear side of the color layer to provide a background color for the color layer and a concealing layer directly disposed on a rear side of the white layer, wherein the concealing layer has a white color or a gray color.

The home appliance may further include a second transparent layer configured to prevent the color of the color layer from changing, wherein the transparent layer is a first transparent layer and the second transparent layer is formed between the color layer and the white layer.

The home appliance further includes a concealing layer formed on the white layer, wherein the concealing layer has a white color or a gray color.

The color layer may be formed by digital printing.

The color layer may include an ink ejected from an inkjet printing device.

The color layer may include an ink ejected from an inkjet printing device and cured by UV light.

Another aspect of the present disclosure provides a method for manufacturing a color panel including receiving color information, forming a color layer having a color and disposed on a transparent layer formed on a surface of a transparent substrate by digital printing based on the color information, forming a white layer on the color layer, the white layer providing a background color for the color layer, and forming a concealing layer (560) having a white color or a gray color directly on the white layer.

The forming of the color layer may include printing a color corresponding to the color information on the first transparent layer using a digital printing device.

The digital printing device may include at least one of an inkjet printing device and a laser printing device.

The method may further include forming a second transparent layer on the color layer, wherein the transparent layer is a first transparent layer and the second transparent layer is configured to prevent the color of the color layer from changing and the white layer is formed on the second transparent layer.

The method may further include forming a concealing layer having a white color or a gray color on the white layer.

The method may further include forming the first transparent layer on the transparent substrate, the first transparent layer adhering the color layer to transparent substrate.

The forming of the white layer may include printing a white ink on the color layer by screen printing or digital printing.

The forming of the second transparent layer may include printing a transparent ink on the color layer by screen printing or digital printing.

Another aspect of the present disclosure provides a color panel including a transparent substrate, a transparent printed layer formed on the transparent substrate, a digital color printed layer having a color and formed on the a rear surface of the transparent printed layer so that the color is viewable through the transparent substrate, a white printed layer formed on the digital color printed layer, and a concealing layer directly disposed on a rear side of the white printed layer, wherein the concealing layer has a white color or a gray color.

The color panel may further include a second transparent printed layer configured to prevent the color of the color layer from changing, wherein the transparent layer is a first printed transparent layer and the second transparent printer layer is formed between the digital color printed layer and the white printed layer.

The color panel further includes a concealing layer formed on the white printed layer, wherein the concealing layer has a white color or a gray color.

The digital color printed layer may be formed by inkjet printing.

The digital color printed layer may include an ink ejected from an inkjet printing device.

### [Advantageous Effects]

According to a color panel, a home appliance including the same, and a method for manufacturing the color panel according to an embodiment, by providing a home appliance including a color panel having a customized color, aesthetic satisfaction of a consumer may be improved and a decrease in productivity of the color panel may be prevented.

### [Description of Drawings]

FIG. 1 is an external view of a refrigerator, as an example of a home appliances according to an embodiment.
FIG. 2 is a view illustrating a door of the refrigerator illustrated in FIG. 1.
FIG. 3 is an external view of a clothes care apparatus, as another example of the home appliance according to an embodiment.
FIG. 4 is an external view of a dishwasher, as another example of the home appliance according to an embodiment.
FIG. 5 is an external view of a cooking apparatus, as another example of the home appliance according to an embodiment.
FIG. 6 is a side cross-sectional view of a color panel according to an embodiment.
FIG. 7 is a view illustrating a direction in which a color panel according to an embodiment is aligned in a home appliance.
FIG. 8 is a flowchart of a method of manufacturing a color panel according to an embodiment.
FIG. 9 is another flowchart of a method of manufacturing a color panel according to an embodiment.
FIG. 10 is a control block diagram of a digital printing device used to manufacture a color panel according to an embodiment. digital printing device.
FIG. 11 is a flowchart of a method of manufacturing a color panel according to an embodiment further including a print setting process.
FIGS. 12 and 13 are views illustrating a process of forming a color layer according to a method of manufacturing a color panel according to an embodiment.
FIG. 14 is a flowchart of a method of manufacturing a color panel according to an embodiment in which ink ejection and UV curing are simultaneously performed.
FIGS. 15 and 16 are views for describing UV curing illustrated in FIG. 14.
FIG. 17 is a flowchart of a method of manufacturing a color panel according to an embodiment in which UV curing is performed after inks are ejected.
FIGS. 18 and 19 are views for describing UV curing illustrated in FIG. 17.
FIG. 20 is a flowchart of a method of manufacturing a color panel according to an embodiment in which a transparent layer is further formed.
FIG. 21 is a side cross-sectional view of a color panel manufactured by the method of FIG. 20.
FIG. 22 is a flowchart of a method of manufacturing a color panel according to an embodiment in which a transparent layer and a concealing layer are further formed.
FIG. 23 is a side cross-sectional view of a color panel manufactured by the method of FIG. 22.
FIG. 24 is a control block diagram for describing a process of receiving color information to manufacture a color panel according to an embodiment.

### [Modes of the Invention]

Throughout the specification, like reference numerals refer to like elements throughout. This specification does not describe all elements of the embodiments of the present disclosure and detailed descriptions on what are well known in the art or redundant descriptions on substantially the same configurations may be omitted. The terms 'unit, module, member, and block' used herein may be implemented using a software or hardware component. According to an embodiment, a plurality of 'units, modules, members, and blocks' may also be implemented using an element and one 'unit, module, member, and block' may include a plurality of elements.

Throughout the specification, when an element is referred to as being "connected to" another element, it may be directly or indirectly connected to the other element and the "indirectly connected to" includes connected to the other element via a wireless communication network.

Also, it is to be understood that the terms "include" or "have" are intended to indicate the existence of elements disclosed in the specification, and are not intended to preclude the possibility that one or more other elements may exist or may be added.

Throughout the specification, it will be understood that when one element, is referred to as being "on" another element, it can be directly on the other element, or intervening elements may also be present therebetween.

Throughout the specification, it will be understood that when one element delivers or transmits a signal to another element, it is not intended to preclude the possibility that the signal is delivered or transmitted via an intervening element therebetween unless otherwise stated.

Throughout the specification, terms "first", "second", and the like are used to distinguish one component from another, without indicating alignment order, manufacturing order, or importance of the components.

An expression used in the singular encompasses the expression of the plural, unless otherwise indicated.

The reference numerals used in operations are used for descriptive convenience and are not intended to describe the order of operations and the operations may be performed in a different order unless the order of operations are clearly stated.

According to a color panel, a home appliance including the same, and a method for manufacturing the color panel according to an embodiment, by providing a home appliance including a color panel having a customized color, aesthetic satisfaction of a consumer may be improved and a decrease in productivity of the color panel may be prevented

Hereinafter, a color panel, a home appliance including the same, and a method of manufacturing the color panel according to an embodiment embodiments of the present disclosure will be described in detail with reference to the accompanying drawings.

The home appliance according to an embodiment may include at least one of various home appliances such as a refrigerator, a clothes care apparatus, a dishwasher, and a cooking apparatus. Hereinafter, some examples of the home appliance according to an embodiment will be described.

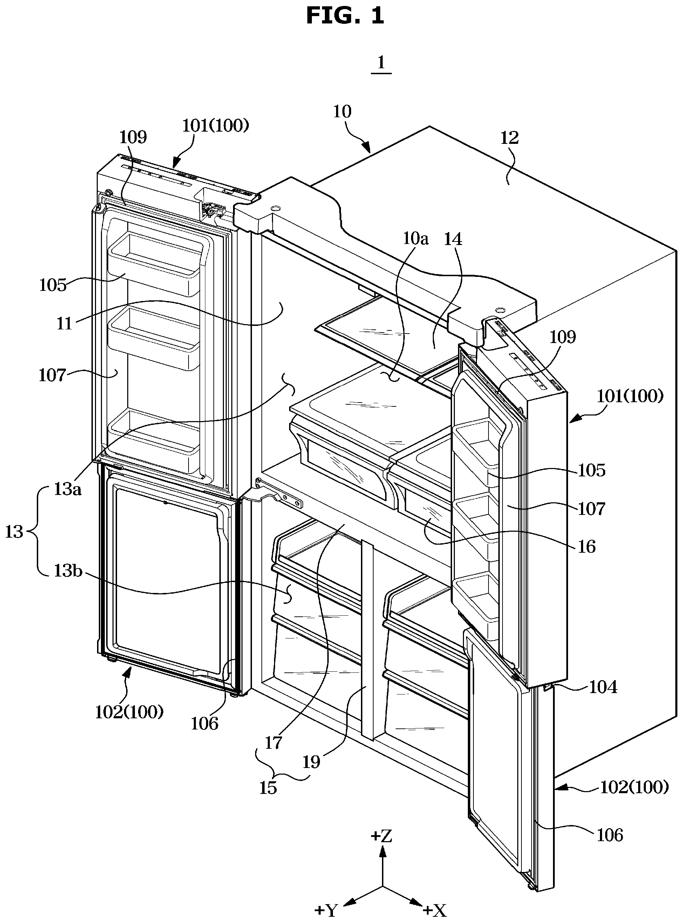

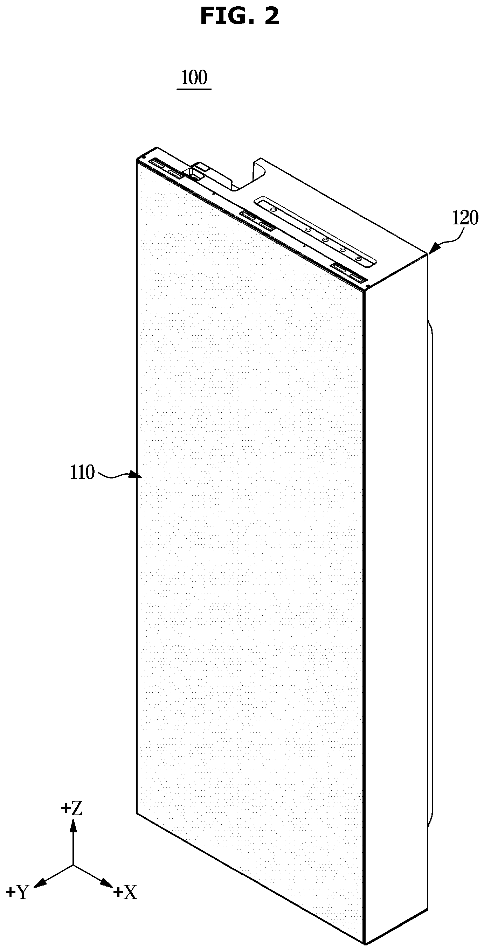

FIG. 1 is an external view of a refrigerator, as an example of a home appliances according to an embodiment. FIG. 2 is a view illustrating a door of the refrigerator illustrated in FIG. 1.

In the embodiment to be described later, directions defined by X-axis, Y-axis, and Z-axis are described relative to the home appliance. A width direction of the home appliance is defined as the X-axis, a depth direction is defined as the Y-axis, and a height direction is defined as the Z-axis. In addition, an outward direction of the main body opening 10a is defined as +Y direction and an inward direction is defined as -Y direction.

Meanwhile, forward and backward direction of the home appliance may be defined by arrangement of the home appliance or a position relative to a consumer or user. In the embodiment, a consumer who purchases and uses a home appliance is defined as a user.

When a refrigerator 1 is arranged as shown in FIG. 1, a user generally sees the main body opening 10a (in a state where the door is opened) or door 100 (in a state where the door is closed), the +Y direction where the user is located relative to the refrigerator 1 may be defined as a forward direction and the -Y direction may be defined as a backward direction.

Referring to FIG. 1, the refrigerator 1 includes a main body 10, a storage compartment 13 divided into upper and lower storage compartments by a horizontal partition in the main body 10, a door 100 configured to open and close the storage compartment 13, and a cooling air supply device (not shown) configured to supply cooling air to the storage compartment 13.

The main body 10 may include an inner cabinet 11 defining the storage compartment 13, an outer cabinet 12 coupled to outer sides of the inner cabinet 11 to define an appearance, and a main body insulation material (not shown) disposed between the inner cabinet 11 and the outer cabinet 12 to insulate the storage compartment 13.

The cooling air supply device may generate cooling air by using a cooling circulation cycle of compressing, condensing, expanding, and evaporating a refrigerant.

The storage compartment 13 may be divided into a plurality of regions by a partition 15, and a plurality of shelves 14 and storage containers 16 may be provided in the storage compartment 13 to store foods, or the like.

The storage compartment 13 may be divided into a plurality of storage compartments 13a and 13b by the partition 15 and the partition 15 includes a first partition 17 arranged in a horizontal direction to vertically divide the interior of the storage compartment 13, and a second partition 19 arranged in the longitudinal direction to horizontally divide the interior of the storage compartment 13.

The division of the storage compartment 13 is given as an example, and the storage compartment 13 may also be divided in any method other than the above-described example.

The storage compartment 13 may be opened or closed by the door 100. The door 100 may include a pair of first doors (or upper doors) 101 to open and close an upper storage compartment 13a and a pair of second doors (or lower doors) 102 to open and close a lower storage compartment 13b.

The pair of the first doors 101 and the pair of second door 102 may open and close the main body opening 10a of the open main body 10. Handles may be provided at the first door 101 and the second door 102 and a user may open the first door 101 and the second door 102 using the handles respectively provided at the first door 101 and the second door 102.

Door shelves 105 to store foods may be provided at the rear surface of the first door 101. The door shelves 105 may include shelve supports 107 extending in a direction perpendicular to the first door 101 to support the door shelves 105 at both sides of each door shelf 105. The shelve supports 107 may be detachably provided to the first doors 101 as separate components and in the present embodiment, the shelve supports 107 are provided to vertically extend in a form protruding from the rear surfaces of the first door 101.

A first gasket 109 may be provided on the rim of the rear surface of the first door 101 to seal a gap between the first doors 101 and the main body 10 when the first door 101 is closed. The first gasket 109 may be provided in a loop shape along the rim of the rear surface of the first door 101 and may include a first magnet (not shown).

The lower storage compartment 13b may be opened and closed by the second doors 102 pivotally coupled to the main body 10. A second gasket 106 may be provided on the rim of the rear surface of the second door 102 to seal a gap between the second door 102 and the main body 10 when the second door 102 is closed. The second gasket 106 may be provided in a loop shape along the rim of the rear surface of the second door 102 and may include a second magnet (not shown).

Referring to FIG. 2, the door 100 may include a door panel 110 and a door body 120. The door panel 110 may be detachably coupled to the door body 120. The door 100 shown in FIG. 2 is one of a pair of upper doors 101.

The door panel 110 may be provided on the front side of the door 100, and the door body 120 may be provided on the rear side of the door 100, i.e., to face the inside of the main body 10. The front side of the door 100 may refer to a side shown to the user when the door 100 is closed. The rear side of the door 100 may refer to a side facing the storage compartment 13 when the door 100 is closed.

The door body 120 provided on the rear side of the door 100 may include various components to define an appearance of the door 100 such as a chassis, a door cap, a cover, and a case and components to seal the storage compartment 13 in the main body 10 from the outside.

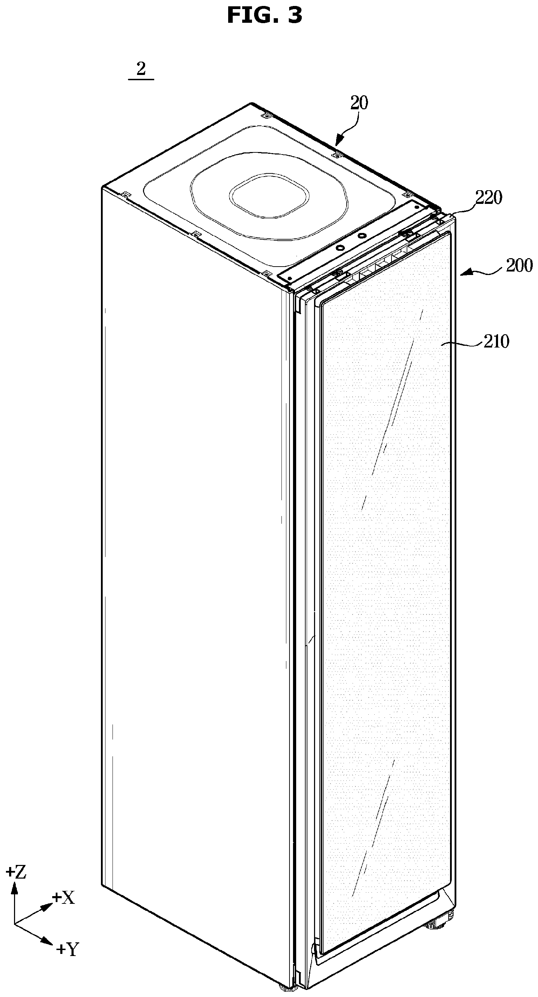

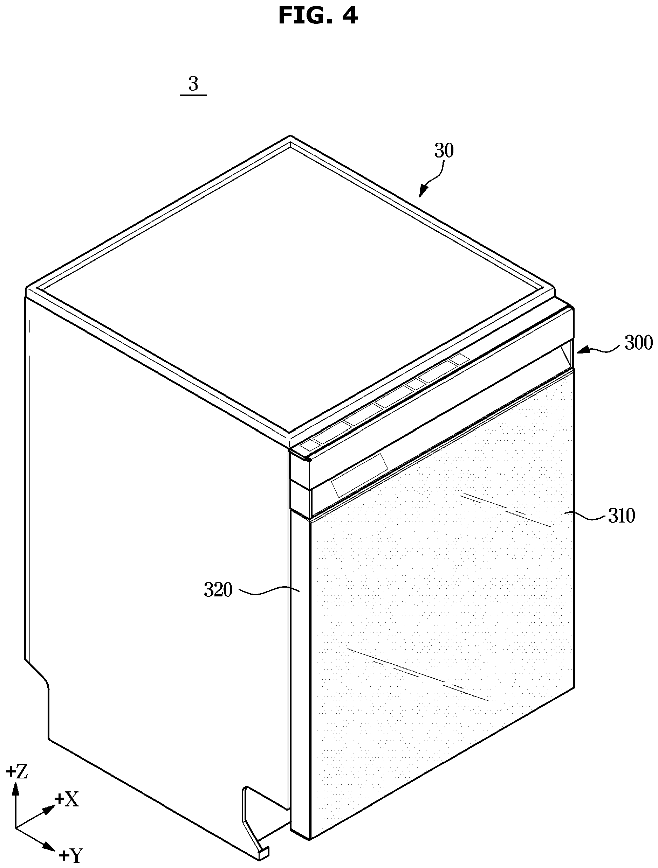

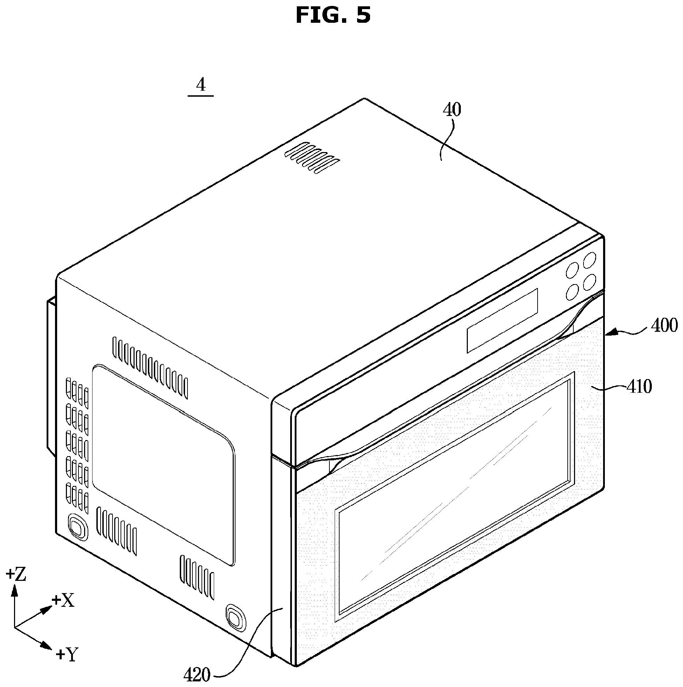

FIG. 3 is an external view of a clothes care apparatus, as another example of the home appliance according to an embodiment, FIG. 4 is an external view of a dishwasher, as another example of the home appliance according to an embodiment, and FIG. 5 is an external view of a cooking apparatus, as another example of the home appliance according to an embodiment.

Referring to FIG. 3, a clothes care apparatus 2 may include a main body 20 defining an appearance and a door 200 pivotally coupled to the main body 20. The clothes care apparatus 2 may include a clothes care chamber disposed in the main body 20 to contain clothes, a clothes support member (not shown) disposed inside the clothes care chamber and configured to mount clothes, and a machine room (not shown) including a heat exchanger (not shown) to dehumidify or heat the air inside the clothes care chamber.

The door 200 may open and close the clothes care chamber provided inside the main body 20. The door 200 may include a door panel 210 and a door body 220, and the door panel 210 may be detachably coupled to the door body 220. As shown in FIG. 3, the door panel 210 may be provided on the front side of the door 200, and the door body 220 may be provided on the rear side of the door 200. The front side of the door 200 refers to a side shown to the user when the door 200 is closed. The rear side of the door 200 refers to a side facing the inside of the main body 20 when the door 200 is closed.

Referring to FIG. 4, a dishwasher 3 may include a main body 30 defining an appearance and a door 300 pivotally coupled to the main body 30.

A washing chamber (not shown) to contain dishes may be provided in the main body 30. The dishwasher 3 may include various components such as a plurality of nozzles to wash dishes contained in the washing chamber, a driving device configured to drive the plurality of nozzles, and a controller configured to control the driving device. The door 300 may open and close the washing chamber disposed inside the main body 30.

The door 300 may include a door panel 310 and a door body 320, and the door panel 310 may be detachably coupled to the door body 320. As shown in FIG. 4, the door panel 310 may be provided on the front side of the door 300, and the door body 320 may be provided on the rear side of the door 300. The front side of the door 300 refers to a side shown to the user when the door 300 is closed. The rear side of the door 300 refers to a side facing the inside of the main body 30 when the door 300 is closed.

Referring to FIG. 5, a cooking apparatus 4 may include a main body 40 defining an appearance and a door 400 pivotally coupled to the main body 40.

A cooking chamber (not shown) to contain food ingredients may be provided in the main body 40, and the cooking apparatus 4 may include various components such as a heater, a heating wire, a fan, and a controller for heating and cooking food ingredients contained in the cooking chamber.

The door 400 may open and close the cooking chamber disposed in the main body 40. The door 400 may include a door panel 410 and a door body 420, and the door panel 410 may be detachably coupled to the door body 420. As shown in FIG. 5, the door panel 410 may be provided on the front side of the door 400, and the door body 420 may be provided on the rear side of the door 400. The front side of the door 400 refers to a side shown to the user when the door 400 is closed. The rear side of the door 400 refers to a side facing the inside of the main body 40 when the door 400 is closed.

Although an oven is exemplarily described as an example of the cooking apparatus 4 in the present embodiment, an induction range for heating a cooking utensil positioned on a plate by magnetic induction may also be included as the cooking apparatus 4. When the cooking apparatus 4 is implemented by an induction range, a color panel 500 may be applied to a control panel or a plate provided with a user interface.

All of the home appliances 1, 2, 3, and 4 according to the above-described embodiments include the doors 100, 200, 300, and 400 used to open and close interior space of the main bodies 10, 20, 30, and 40, and the doors 100, 200, 300, and 400 include the door panels 110, 210, 310, and 410 defining the appearances thereof, respectively. That is, the door panels 110, 210, 310, and 410 are shown to the user in a state where the doors 100, 200, 300, and 400 are closed.

When the home appliances 1, 2, 3, and 4 is not in use, the doors 100, 200, 300, and 400 are closed, and the user need to approach and open the doors 100, 200, 300, and 400 to use the home appliances 1, 2, 3, and 4. Therefore, it can be seen that the door panels 110, 210, 310, and 410 are one of the parts affecting aesthetic satisfaction of the user.

As a factor capable of improving aesthetic satisfaction of the user without affecting the functions of the doors 100, 200, 300, and 400, color of the door panels 110, 210, 310, and 410 may be used. Therefore, when the door panels 110, 210, 310, and 410 are implemented to have a color as desired by the user, user's aesthetic satisfaction with the home appliances 1, 2, 3, and 4 may be improved.

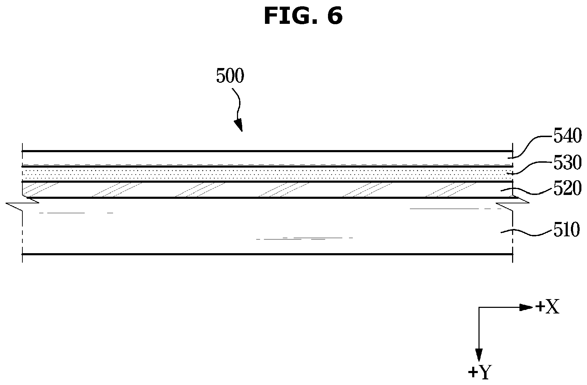

To this end, the color panel 500 (see FIG. 6) according to an embodiment to be described below may be used as the door panels 110, 210, 310, and 410 of the home appliances 1, 2, 3, and 4.

Meanwhile, the above-described home appliances are merely examples of the home appliance according to an embodiment. Therefore, any other home appliances including the color panel 500 to be described below may also be included in the embodiments of the present disclosure as well as the above-described home appliances.

In addition, the color panel 500 is not necessarily used only as the door panel. The color panel 500 may also be implemented as a panel included in the main bodies 10, 20, 30, and 40 or any panel defining the appearance of the home appliance and shown to the user as well as the main bodies 10, 20, 30, and 40.

Hereinafter, a color panel 500 and a method of manufacturing the same according to an embodiment of the present disclosure will be described in detail.

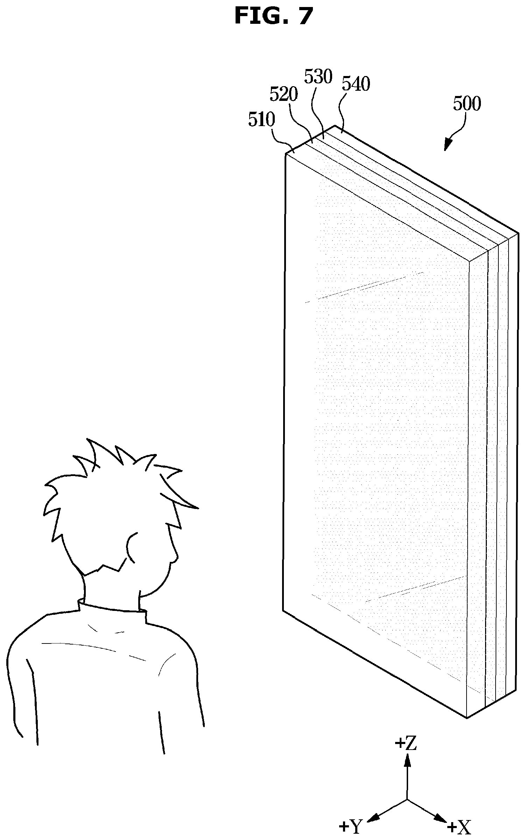

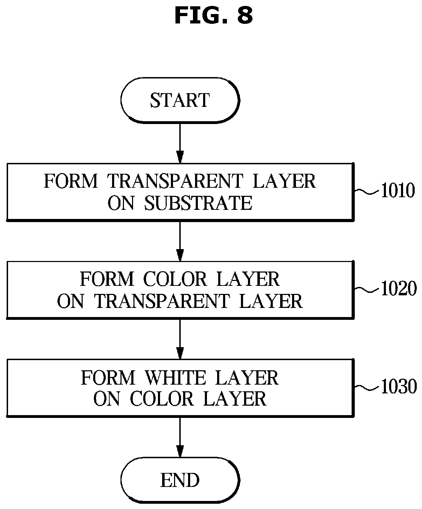

FIG. 6 is a side cross-sectional view of a color panel according to an embodiment, FIG. 7 is a view illustrating a direction in which a color panel according to an embodiment is aligned when used in a home appliance, and FIG. 8 is a flowchart of a method of manufacturing a color panel according to an embodiment.

Referring to FIG. 6, the color panel 500 according to an embodiment includes a substrate 510, a transparent layer 520 formed on the substrate 510, a color layer 530 formed on the transparent layer 520, and a white layer 540 formed on the color layer 530. However, these elements may also be referred to as a transparent printed layer 520, a digital color printed layer 530, and a white printed layer 540 according to a method of forming each element.

When the color panel 500 is applied to the home appliances 1, 2, 3, and 4, the substrate 510 may be disposed to be located on the front side of the home appliances 1, 2, 3, and 4. That is, as shown in FIG. 7, the substrate 510 may be disposed on the front side of the color panel 500 and the white layer 540 may be disposed on the rear side thereof. In addition, relative with respect to the substrate 510, the transparent layer 520, the color layer 530, and the white layer 540 may be sequentially located on the rear surface of the substrate 510 (in the - Y direction).

The user sees the color panel 500 in front of the substrate 510 and recognizes a color of the color layer 530 disposed behind the substrate 510 as a color of the color panel 500.

Therefore, the substrate 510 may be formed of a transparent material. For example, a transparent glass may be used as the material of the substrate 510. Because glass is strong against scratches and impact and is not easily deformed, the substrate 510 formed of glass may have excellent durability and abrasion resistance. However, examples of the color panel 500 are not limited thereto, and any other material such as a transparent plastic material may also be used to form the substrate 510 in accordance with intended use of the home appliance to which the color panel 500 is applied.

In addition, the substrate 510 may have a flat rectangular shape. However, it is obvious that the substrate 510 may have any shape other than the flat rectangular shape in accordance with intended use of the color panel 500.

As shown in FIG. 7, by arranging the substrate 510 at the outermost side and components involved in realizing a color behind the substrate 510, exposure of a printed layer, which realizes the color, to an external environment and an organic contact with the user may be minimized and discoloration, peeling off, or the like may be prevented.

Hereinafter, the configuration and a manufacturing method of the color panel 500 will be described with reference to the flowchart of FIG. 8.

To manufacture the color panel 500 of FIG. 7, first, the transparent layer 520 is formed on the substrate 510, and then the color layer 530 is formed on the transparent layer 520 formed on the substrate 510.

For descriptive convenience, formation of the color layer 530 will be described first. The color layer 530 may be formed by digital printing. In the present embodiment, the digital printing is a printing method distinguished from screen printing (or silk screen printing).

Screen printing is a printing technique where a desired color is printed on an object to be printed by disposing a screen formed of silk or the like on the object to be printed, applying a pre-mixed ink to the screen, squeezing and drying the applied ink. This method is suitable for mass production of small items because the ink should be mixed in advance.

In the case where color information according to the CMYK color system or the RGB color system is input to a digital printing device such as an inkjet printer or a laser printer, a desired color may be printed onto an object to be printed by spraying inks or toners respectively having cyan, magenta, yellow, and block colors through a plurality of nozzles of the digital printing device. The type of inks may vary in accordance with the color system used in the digital printing device. Digital printing is a printing technique using such a digital printing device.

In the method of manufacturing the color panel 500 according to an embodiment, a digital printing device is used to form the color layer 530. In the case of using the digital printing device, there is no need to previously mix inks or toners because a plurality of color inks or toners are sprayed in an appropriate ratio in accordance with color information input whenever printing is performed. Also, various colors may be easily printed because the color information may be changed in every printing process, and high productivity may be obtained even when printing is performed in a small amount.

Therefore, it is possible to maintain high productivity even when the color panel 500 having an ordered color is produced in an ordered amount whenever an order for the color panel 500 is received.

In the following embodiment, an inkjet printer will be described as an example of the digital printing device for detailed description.

Inks used in inkjet printers are liquids including a solvent, a pigment, a binder, and other additives. The pigment adheres to the surface of the object to be printed by the binder, and fluidity, surface energy, plasticization of the binder, and the like may be adjusted by the additives.

For stable adhesion of the ink onto the surface of the object to be printed, the surface needs to have a certain degree of printability or more and the printability is determined by factors such as surface tension, roughness, and porosity of the surface.

According to the method of manufacturing the color panel 500 according to an embodiment, the transparent layer 520 may be formed on the substrate 510 and the color layer 530 may be formed on the transparent layer 520 to improve printability. Therefore, although the substrate 510 is formed of a material having a smooth surface such as glass, the color layer 530 may stably adhere to the substrate 510 through the transparent layer 520.

A material used to form the transparent layer 520 may be selected in consideration of adhesive strength to the substrate 510 and the color layer 530. For example, the transparent layer 520 may be formed using a polyester-based transparent resin having excellent adhesive strength.

The transparent layer 520 may be formed by using one of various printing methods. For example, the transparent layer 520 may be formed by screen printing or digital printing. The types of inks used to form the transparent layer 520 may vary according to the printing method. As described above, any transparent ink stably adhering to the substrate 510 and the color layer 530 may be included in the embodiment of the present disclosure.

Also, the transparent layer 520 may be formed by using any one of various coating methods. For example, the transparent layer 520 may be formed by plasma coating or UV coating.

When the color layer 530 is formed, the white layer 540 is formed on the color layer 530 (1030). Referring back to FIG. 7, the user sees the color layer 530 located on the front side of the white layer 540 through the transparent substrate 510 and the transparent layer 520. That is, the white layer 540 serves as a background of the color layer 530. Because the white color of the white layer 540 is used as a background color, the same effect as color printed on white paper may be obtained.

When a user purchases a home appliance 1, 2, 3, or 4, the color of the color panel 500 may be identified via a computer, a mobile device, or a display provided in a digital signage or a kiosk installed in a shop. Because the color output through the display is also a color disposed on a white background, a visual color difference between the color identified by the user and a real color of the color panel 500 may be minimized by arranging the white layer 540 behind the color layer 530.

As an example for implementing the above-described effect, the white color of the white layer 540 may satisfy L*= 90 to 100, a*= -5.0 to 5.0, and b*= -5 to 5 in the CIE LAB color space (L* for brightness and a* and b* for chromaticity indicating color and chroma). In addition, a visible light transmittance may be limited to 10% or less for concealment effect.

Like the transparent layer 520, the white layer 540 may be formed by using one of various printing methods. For example, the white layer 540 may be formed by screen printing or digital printing. The types of inks used to form the white layer 540 may vary according to the printing method. For example, a polyacryl-based white ink that is quickly dried and is easy to adjust viscosity may be used.

Also, the white layer 540 may be formed by any one of various coating methods. For example, the white layer 540 may be formed by plasma coating or UV coating.

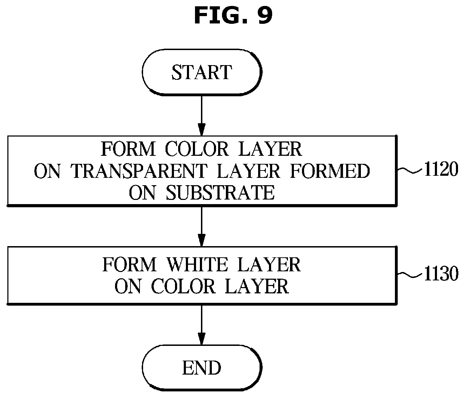

FIG. 9 is another flowchart of a method of manufacturing a color panel according to an embodiment.

As described above, the color of the color panel 500 may vary for each order, but the transparent layer 520 may be formed on the substrate 510 using a transparent ink regardless of the ordered color.

Therefore, in another example of the method of manufacturing the color panel according to an embodiment, a substrate 510 having one surface on which a transparent layer 520 is previously formed may be prepared. The transparent layer 520 may be previously formed on the substrate 510 by using a manufacturing equipment for the color panel 500 or the substrate 510 provided with the transparent layer 520 may be supplied from the outside.

Upon receiving an order for the color panel 500, the color layer 530 may be formed on the transparent layer 520 formed on the substrate 510 (1120), and the white layer 540 may be formed on the color layer 530 (1130).

The manufacturing method is the same as that described above with reference to FIG. 8, except that the transparent layer 520 is previously formed, and redundant description will be omitted.

In this manner, when the color panel 500 is manufactured using the substrate 510 provided with the transparent layer 520 previously formed thereon, manufacturing times and processes may be reduced.

A case in which the transparent layer 520 is previously formed on the substrate 510 will be exemplarily described in the following embodiment.

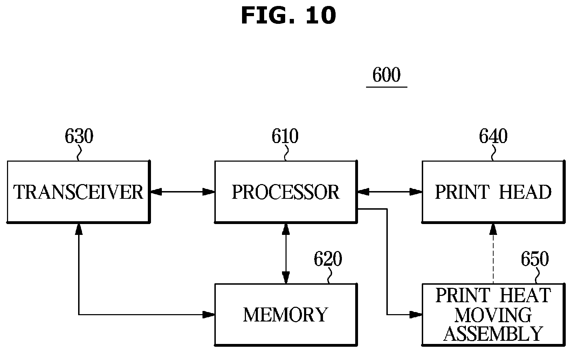

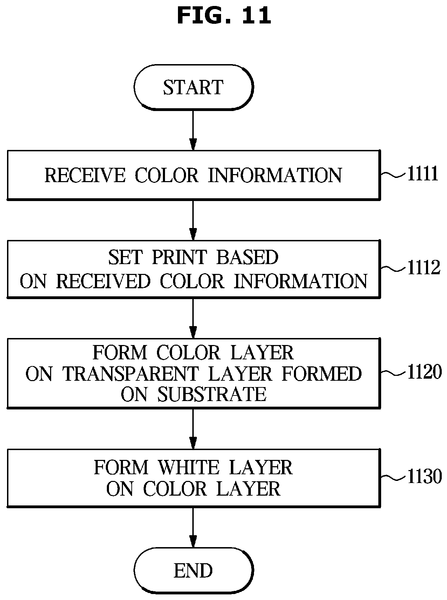

FIG. 10 is a control block diagram of a digital printing device used to manufacture a color panel according to an embodiment. FIG. 11 is a flowchart of a method of manufacturing a color panel according to an embodiment further including a print setting process.

Referring to FIG. 10, a digital printing device 600 includes a transceiver 630 configured to receive printing data, a memory 620 to store the received printing data, a processor 610 configured to perform print setting based on the printing data, a print head 640 configured to eject inks through a plurality of nozzles, and a print head moving assembly 650 configured to move the print head 640.

For example, types of the inks ejected through the plurality of nozzles may include cyan ink, magenta ink, yellow ink, and black ink. However, some inks may be added or omitted, if necessary. For example, white ink or transparent ink may further be added and black ink may be omitted.

Referring together with FIG. 11, the method of manufacturing a color panel according to an embodiment may include receiving color information, performed by the digital printing device 600 (1111). The printing data received by the transceiver 630 may include color information.

According to an embodiment of the color panel 500, the color layer 530 may be implemented by a solid color or an image having various colors. In this regard, the image may include text. In the case where the color layer 530 is implemented by an image, the color information may include image information, and the digital printing device 600 may form an image corresponding to the received image information on the transparent layer 520.

The color information may be received in the form of a color code corresponding to a color selected by the consumer. However, types of the printing data received by the digital printing device 600 are not limited thereto, and any information indicating CMYK values or RGB values may also be used as color information received by the digital printing device 600 regardless of the types.

In addition, the received color information may be color information defined by the same color system as that applied to the digital printing device 600 or a color system different therefrom. For example, when the digital printing device 600 employs the CMYK color system, the received color information may be color information indicating CMYK values or color information indicating RGB values. In the latter case, the processor 610 may convert the color information indicating the RGB values into color information corresponding to the CMYK color system.

Print setting is performed based on the received color information (1112). The processor 610 may perform various data processing or data conversion processes to perform printing based on the received color information and these operations are referred to as print setting in the present embodiment.

For example, the processor 610 may determine concentration data of the cyan ink, the magenta ink, the yellow ink, and the black ink based on the received color information and resolution.

In addition, the processor 610 may set resolution data and the resolution data may be set as a high resolution greater than a predetermined reference value in the manufacturing process of the color panel 500.

The processor 610 may transmit a print signal to the print head 640 based on concentration data and resolution data, and the print head 640 may form the color layer 530 having a color corresponding to the received color information by ejecting inks onto the transparent layer 520 through the plurality of nozzles in accordance with the received print signal (1120). That is, a color corresponding to the received color information may be printed onto the transparent layer 520 by using the digital printing device 600.

As described above, a white layer may be formed on the color layer 530 by screen printing or digital printing (1130).

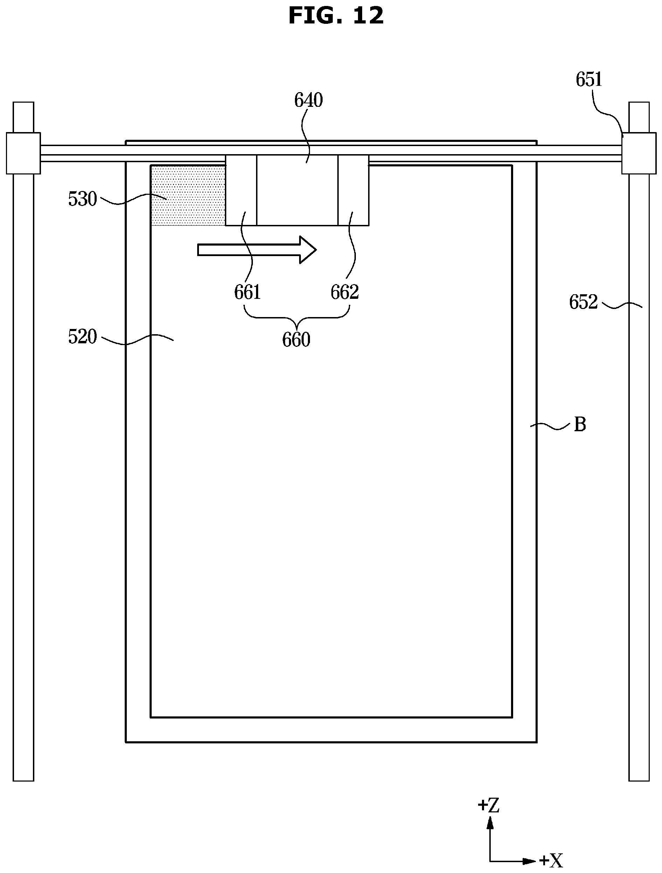

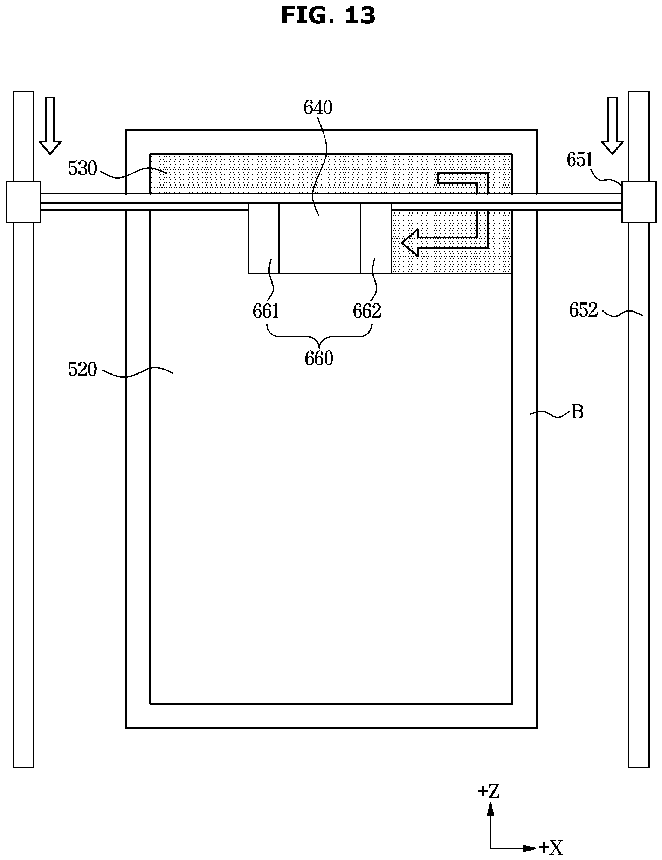

FIGS. 12 and 13 are views illustrating a process of forming a color layer according to a method of manufacturing a color panel according to an embodiment.

Referring to the example shown in FIG. 12, to form the color layer 530, the substrate 510 on which the transparent layer 520 is formed may be located on a printing bed B and fixed thereto.

The print head 640 may move in the X-axis direction (lateral direction) and in the Z-axis direction (longitudinal direction) above the substrate 510 located on the bed B. For example, as shown in FIG. 12, the print head 640 may eject ink through the plurality of nozzles while moving in the X-axis direction.

The print head moving assembly 650 configured to move the print head 640 may include a support 651 to support the print head 640 and a guide rail 652 to guide the support 651 to move in the Z-axis direction. In addition, although not shown in the drawings, the print head moving assembly 650 may further include a motor configured to provide power for movement of the support 651 in the Z-axis direction and movement of the print head 640 in the X-axis direction and a driving circuit configured to drive the same.

However, examples of the method of manufacturing the color panel are not limited to the structures illustrated in FIGS. 12 and 13, and it is obvious that any manufacturing apparatuses other than those illustrated FIGS. 12 and 13 may also be applied as long as the color of the color panel 500 is realized by a digital printing method.

Regions printable by the print head 640 moving from the left end to the right end of the substrate 510 without moving in the Z-axis direction may be divided on the basis of line.

In this case, when the print head 640 has completed printing in a first line, the print head 640 may moves in the Z-axis direction and then perform printing in a next line in the X-axis direction as shown in FIG. 13.

When printing of a previous line is performed while moving to the right (+X-axis direction), printing of a next line may be performed while moving to the left (-X-axis direction). That is, printing may be performed while moving in a zigzag direction.

Alternatively, the print head 640 may move to the left without ejecting inks and then perform printing while moving to the right.

Alternatively, printing may be performed on the same line multiple times while moving opposite directions along the same line.

Lines on which printing is performed may or may not overlap each other. When the lines overlap each other, printing is performed multiple times on the overlapped region so that the color may be developed more clearly in the region.

Meanwhile, when the digital printing device 600 uses an UV-cured ink, the ink ejected from the print head 640 needs to be cured by UV light. Therefore, as shown in FIGS. 12 and 13, the inks ejected from the print head 640 may be cured by UV light by mounting UV lamps 660 at both sides of the print head 640.

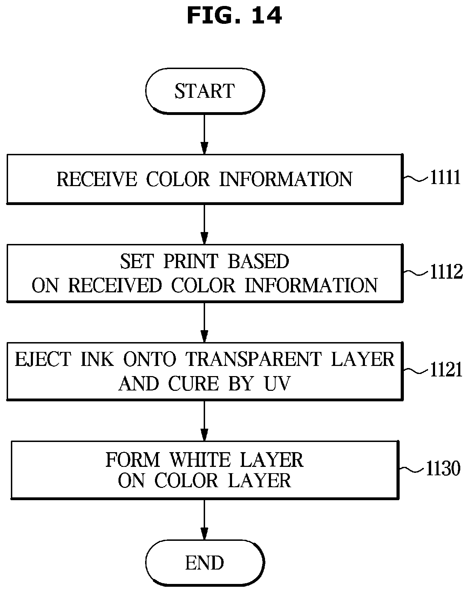

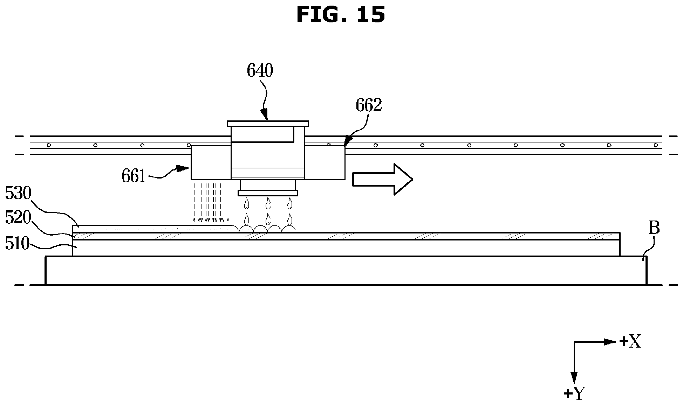

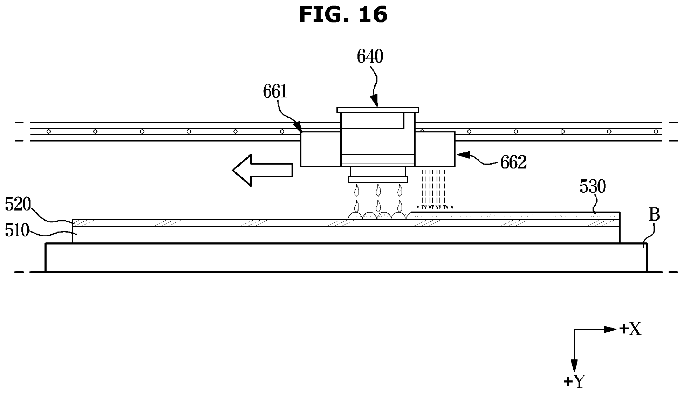

FIG. 14 is a flowchart of a method of manufacturing a color panel according to an embodiment in which ink ejection and UV curing are simultaneously performed. FIGS. 15 and 16 are views for describing UV curing illustrated in FIG. 14.

Referring to FIG. 14, in the case of using the digital printing device 600, particularly, an inkjet printer using an UV-cured ink, the color layer 530 may be formed on the transparent layer 520 formed on the substrate 510 by performing UV curing simultaneously with ejection of the ink (UV-cured inks) (1121). By simultaneously performing ink ejection and UV curing, color stability may be improved.

Referring to FIGS. 15 and 16, the print head 640 may eject the ink while moving in the X-axis direction and, simultaneously, the UV lamp 660 may cure the ejected ink by emitting UV light. To this end, at least one of the two UV lamps 660 mounted at both sides (left and right sides) of the print head 640 may be turned on.

However, the expression 'simultaneously curing' does not mean that a time point at which the ink is ejected onto the transparent layer 520 is accurately the same as a time point at which UV light is emitted to the ejected ink. For example, an error of a time taken for the UV lamp 660 moves to a position corresponding to the ejected ink may be allowed. When the UV curing is not performed separately from the ejection of the ink, the process may be expressed as 'simultaneously curing' although there is a time difference between ink ejection and UV curing.

Both the UV lamps 660 may be turned on regardless of a moving direction of the print head 640, or the UV lamps 660 may be selectively turned on in accordance with the moving direction of the print head 640.

For example, as shown in FIG. 15, when the print head 640 ejects the ink while moving to the right (+X-axis direction), a UV lamp 661 mounted on the left side of the print head 640 may be turned on and a UV lamp 662 mounted on the right side of the print head 640 may be turned off.

Also, when the print head 640 completes ejection of the inks while moving to the right, moves forward in the Z-axis direction, and ejects the ink while moving to the left, the UV lamp 662 mounted on the right side of the print head 640 may be turned on and the UV lamp 661 mounted on the left side thereof may be turned off.

That is, the ejected inks may be cured by turning on the UV lamp 660 mounted at a position opposite to the moving direction of the print head 640.

As described above, by selectively turning on/off the UV lamps 661 and 662 in accordance with the moving direction of the print head 640, unnecessary power consumption may be reduced.

Although a case in which one UV lamp 660 is mounted on each of the left and right sides of the print head 640 is described in the above-described example, the position and number of the UV lamps 660 are not limited thereto. For example, at least one UV lamp 660 may be mounted on each of the left and right sides of the print head 640, and the UV lamp 660 may be mounted only on the left side or only on the right side of the print head 640.

In the case where the UV lamp 660 is mounted only on the left or right side of the print head 640, a printing direction of the print head 640 may be limited to one direction. For example, when the UV lamp 660 is mounted only on the left side of the print head 640, the print head 640 may eject the inks while moving to the right. When the UV lamp 660 is mounted only on the right side of the print head 640, the print head 640 may eject the inks while moving to the left.

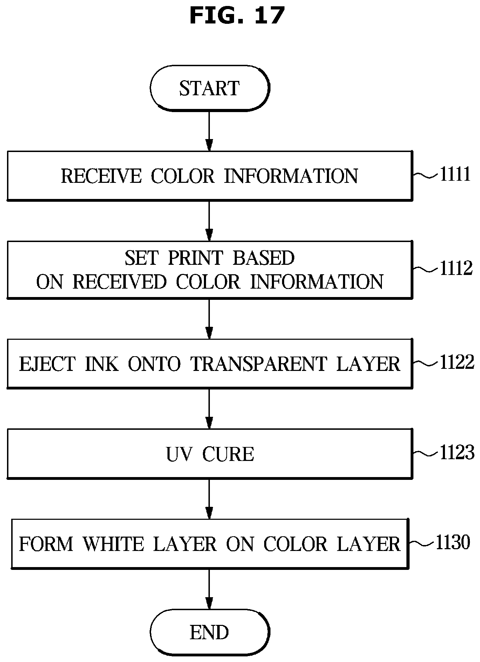

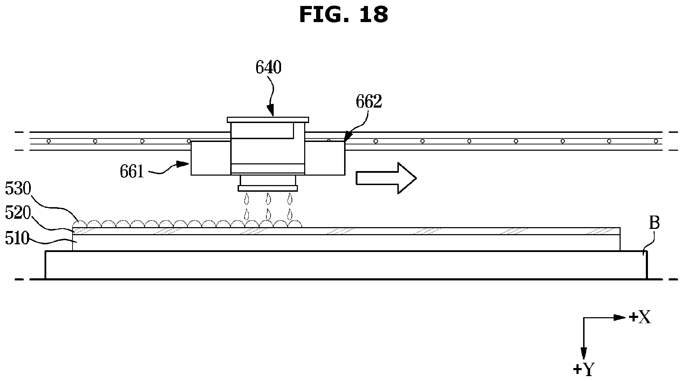

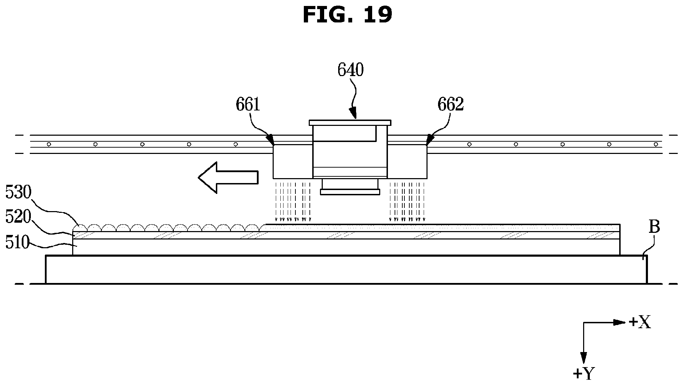

FIG. 17 is a flowchart of a method of manufacturing a color panel according to an embodiment in which UV curing is performed after inks are ejected. FIGS. 18 and 19 are views for describing UV curing illustrated in FIG. 17.

Referring to FIG. 17, the operations of receiving color information (1111) and performing print setting (1112) are as described above, and thus descriptions thereof will be omitted.

According to another example of the method of manufacturing the color panel, after the inks are ejected onto the transparent layer 520 (1122), UV curing may be performed (1123). When the UV curing is performed after the inks are ejected, a time during which ink droplets of different colors are mixed may be obtained to realize a desired color.

In this case, as shown in FIG. 18, the UV lamp 660 may be turned off while the print head 640 ejects the inks. As shown in FIG. 19, upon completion of the ejection of the inks, the UV lamp 660 may be turned on and perform curing of the ejected inks while the print head 640 is moving.

For example, when the print head 640 completes ejection of the inks onto one line while moving in the X-axis direction, UV curing may be performed on the same line while the print head 640 is moving in the X-axis direction opposite to the moving direction of ink ejection without moving forward in the Y-axis direction.

As another example, after the print head 640 completes ejection of the ink over the entire surface of the entire substrate 510, the UV lamp 660 may be turned on and perform UV curing over the substrate 510 while moving again.

As described above, two or more UV lamps 660 may be mounted, or the UV lamp 660 may be mounted only on the left or right side of the print head 640.

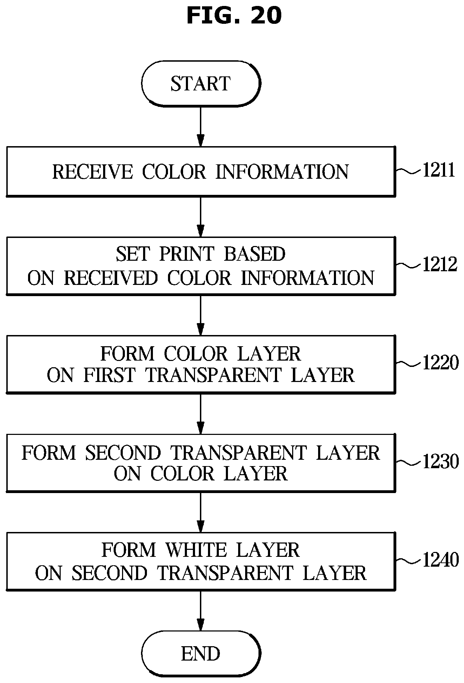

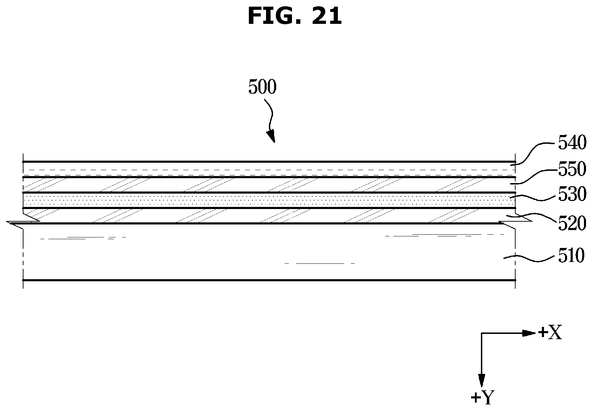

FIG. 20 is a flowchart of a method of manufacturing a color panel according to an embodiment in which a transparent layer is further formed. FIG. 21 is a side cross-sectional view of a color panel manufactured by the method of FIG. 20.

Referring to FIGS. 20 and 21 together, to manufacture the color panel 500, color information is received (1211), print setting is performed based on the received color information (1212), and the color layer 530 is formed on the transparent layer 520 formed on the substrate 510 (1220). These operations are as described above.

In the present embodiment, the white layer 540 is not directly formed on the color layer 530, and a second transparent layer 550 is formed (1230), and then the white layer 540 may be formed on the second transparent layer 550 (1240).

For distinguishment from the second transparent layer 550 formed between the color layer 530 and the white layer 540, the transparent layer 520 interposed between the substrate 510 and the color layer 530 is referred to as a first transparent layer 520.

In some cases, empty space may be formed between ink droplets constituting the color layer 530. As in the present embodiment, by forming the second transparent layer 550 between the color layer 530 and the white layer 540, the white ink constituting the white layer 540 permeates into the empty space between the ink droplets constituting the color layer 530 to prevent color change.

The second transparent layer 550 may also be formed by using one of various printing methods. For example, the second transparent layer 550 may be formed by screen printing or digital printing. To form the second transparent layer 550, various types of inks may be used according to the printing method. For example, a polyester-based transparent ink or a polyacryl-based transparent ink may be used.

Also, the second transparent layer 550 may be formed by using any one of various coating methods. For example, the second transparent layer 550 may be formed by plasma coating or UV coating.

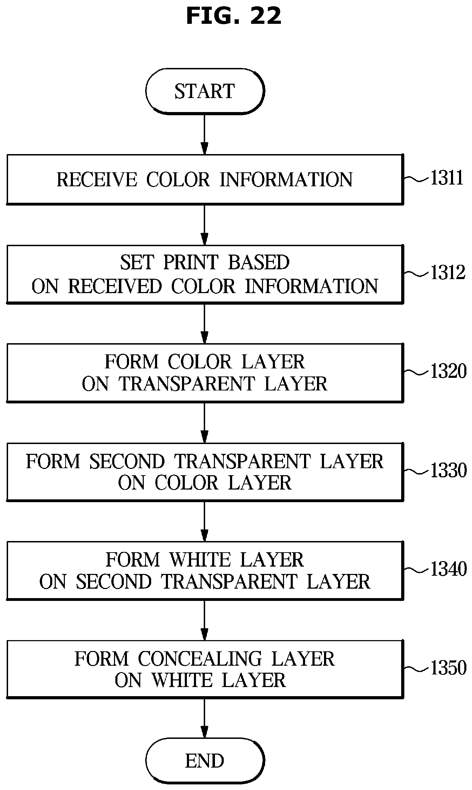

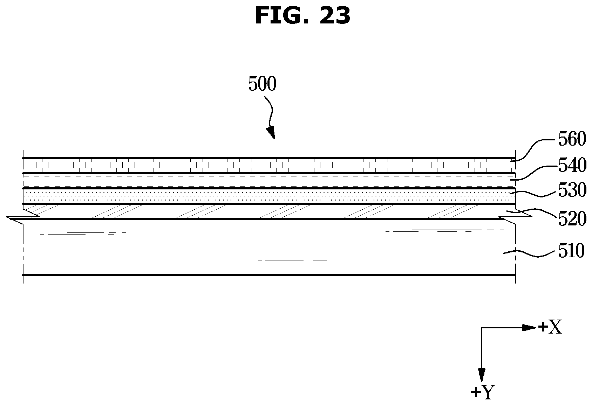

FIG. 22 is a flowchart of a method of manufacturing a color panel according to an embodiment in which a transparent layer and a concealing layer are further formed. FIG. 23 is a side cross-sectional view of a color panel manufactured by the method of FIG. 22.

Referring to FIGS. 22 and 23, to manufacture the color panel 500, color information is received (1311), print setting is performed based on the received color information (1312), and the color layer 530 is formed on the transparent layer 520 formed on the substrate 510 (1320). The second transparent layer 550 is formed on the color layer 530 (1330), and the white layer 540 is formed on the second transparent layer 550 (1340). Alternatively, the second transparent layer 550 may be omitted. These operations are as described above.

In the embodiment, a concealing layer 560 is formed on the white layer 540 (1350). The concealing layer 560 may be formed of an ink or resin composition having a concealing effect, such as white ink and gray ink.

As described above, the color panel 500 according to an embodiment may be used as the doors 100, 200, 300, and 400 of the home appliances 1, 2, 3, and 4 or other panels defining the appearance thereof. In this regard, the substrate 510 is disposed on the front side of the color panel 510 to be exposed to the outside, and the white layer 540 is disposed behind the color panel 500 to face the inside of the home appliances 1, 2, 3, and 4.

As described above, various structures are arranged in the home appliances 1, 2, 3, and 4. For example, when the color panel 500 is used in the doors 100, 200, 300, and 400 of the home appliances 1, 2, 3, and 4, a buffer member provided to absorb impact or inner structures such as the door bodies 120, 220, 320, and 420 may be arranged behind the color panel 500.

Therefore, when the concealing layer 560 is formed on the white layer 540 as shown in this embodiment, it is possible to prevent the inner structures of the home appliances 1, 2, 3, and 4 from being seen to the outside through the transparent substrate 510.

The concealing layer 560 may also be formed by using one of various printing methods. For example, the concealing layer 560 may be formed by screen printing or digital printing. To form the concealing layer 560, various types of inks may be used according to the printing method. For example, a polyester-based transparent ink or a polyacryl-based transparent ink may be used.

Also, the concealing layer 560 may be formed by using any one of various coating methods. For example, the concealing layer 560 may be formed by plasma coating or UV coating.

Meanwhile, each of the layers constituting the color panel 500 described above may be provided as a single layer or, if required, may be provided as multiple layers by performing printing or coating plural times.

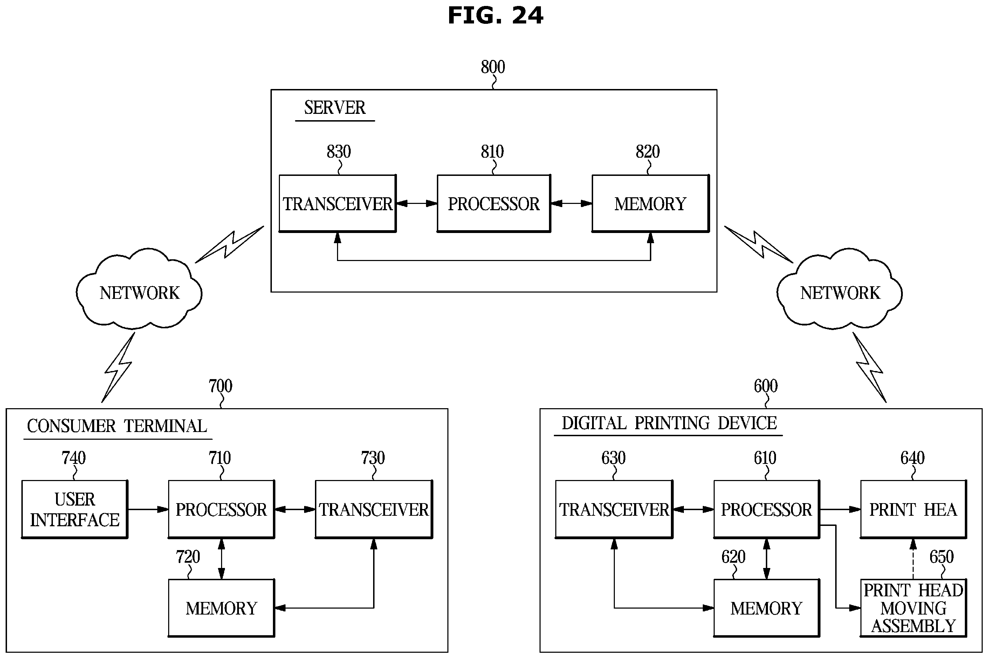

FIG. 24 is a control block diagram for describing a process of receiving color information to manufacture a color panel according to an embodiment.

According to the color panel 500 and the manufacturing method thereof as described above, the color layer 530 of the color panel 500 is formed by receiving color information desired by a consumer, and performing digital printing based on the received color information. The process of receiving color information is described above in detail.

First, the consumer may select a color of a home appliance using a consumer terminal 700. The selectable color of the home appliance may include a color of the door or the main body.

The consumer terminal 700 may be an electronic device including an input/output interface such as a computer and a mobile device used by the consumer, or a computer, a mobile device, a digital signage, or a kiosk installed in a shop for selling the home appliance.

The consumer terminal 700 includes a user interface 740 including a display and an input device, at least one processor 710 configured to control the consumer terminal 700, a memory 720, and a transceiver 730.

The user interface 740 may display a screen for guiding selection of a color of the home appliance and receive an input of a color selected by the user. For example, the user interface 740 may display various types of colors selectable for each home appliance.

The processor 710 may store information on the selected color (hereinafter, referred to as color information) in the memory 720, and the transceiver 730 may transmit the color information stored in the memory 720 to a server 800 via a network. In this case, information on the home appliance to which the selected color is applied may also be transmitted.

A transceiver 830 of the server 800 may receive the color information and home appliance information from the consumer terminal 700 and the received information may be stored in the memory 820.

The processor 810 may transmit the stored color information and home appliance information to a manufacturing system of the color panel 500 via the transceiver 830. The transmitted color information and home appliance information may be received by a computer of the manufacturing system, and the received color information may be transmitted to the digital printing device 600 of the manufacturing system.

Operations performed by the digital printing device 600 are as described above with reference to FIGS. 10 and 11.

In this way, the color information of the home appliance selected by the consumer terminal 700 is transmitted to the digital printing device 600 via the server 800, and thus the color panel 500 of the home appliance may be prepared in the make-to-order manufacturing method. Because color panels of the same color are not previously manufactured in large quantities, an inventory problem may be solved, thereby providing a consumer with various options for the color of the home appliance.

Meanwhile, the color information transmitted from the consumer terminal 700 to the server 800 and the color information transmitted from the server 800 to the manufacturing system may be the same type or different types of information. For example, when the color information received from the consumer terminal 700 does not correspond to the color system used in the digital printing device 600, the external server 800 or the manufacturing system may convert the color information into information corresponding to the color system used in the digital printing device 600.

According to the embodiments described above, a color of a color panel used in home appliances may be realized by digital printing such as inkjet printing. Therefore, whenever printing is performed, a plurality of color inks are ejected in an appropriate ratio in accordance with the input color information, and thus there is no need to previously mix inks or toners. Also, because the color information may be changed every printing process, various colors may be easily printed, and high productivity may be obtained even when printing is performed in a small amount.

Due to the above-described advantages, the make-to-order manufacturing method by which the color panel is manufactured upon receiving an order for the home appliance from the consumer may be applied. Because color panels of the same color are not previously manufactured in large quantities, an inventory problem may be solved, and thus a consumer may be provided with various options for the color of the home appliance.

## Claims

1. A home appliance (1, 2, 3, 4) comprising:
a main body (10, 20, 30, 40); and
a door (100, 200, 300, 400) to open and close the main body (10, 20, 30, 40),
wherein a color panel (500) included in at least one of the main body (10, 20, 30, 40) and the door (100, 200, 300, 400), the color panel (500) comprises:
a transparent substrate (510) disposed on a front side of the color panel (500);
a color layer (530) having a color and disposed on a rear side of the transparent substrate (510) so that the color is viewable through the transparent substrate (510);
a transparent layer (520) disposed between the color layer (530) and the transparent substrate (510) to adhere a front side of the color layer (530) to the rear side of the substrate (510);
a white layer (540) disposed on a rear side of the color layer (530) to provide a background color for the color layer (530), and
a concealing layer (560) directly disposed on a rear side of the white layer (540), wherein the concealing layer (560) has a white color or a gray color.

2. The home appliance (1, 2, 3, 4) of claim 1, further comprises
a second transparent layer (550) configured to prevent the color of the color layer (530) from changing, wherein the transparent layer (520) is a first transparent layer (520) and the second transparent layer (550) is disposed between the color layer (530) and the white layer (540).

3. The home appliance (1, 2, 3, 4) of claim 1, wherein the color layer (530) is formed by digital printing.

4. The home appliance (1, 2, 3, 4) of claim 1, wherein the color layer (530) comprises an ink ejected from an inkjet printing device.

5. The home appliance (1, 2, 3, 4) of claim 4, wherein the color layer (530) comprises an ink ejected from an inkjet printing device and cured by UV light.

6. A method for manufacturing a color panel (500), the method comprising:
receiving color information;
forming a color layer (530) having a color and disposed on a transparent layer (520) formed on a surface of a transparent substrate (510) by digital printing based on the color information;
forming a white layer (540) on the color layer (530), the white layer (540) providing a background color for the color layer (530), and
forming a concealing layer (560) having a white color or a gray color directly on the white layer (540).

7. The method of claim 6, wherein the forming of the color layer (530) comprises printing a color corresponding to the color information on the first transparent layer (520) using a digital printing device (600).

8. The method of claim 7, wherein the digital printing device (600) comprises at least one of an inkjet printing device and a laser printing device.

9. The method of claim 6, further comprises forming a second transparent layer (550) on the color layer (530), wherein the transparent layer (520) is a first transparent layer (520) and the second transparent layer (550) is configured to prevent the color of the color layer (530) from changing,
wherein the white layer (540) is formed on the second transparent layer (550).

10. The method of claim 6, further comprises forming the transparent layer (520) on the transparent substrate (510), the transparent layer (520) adhering the color layer (530) to transparent substrate (510).

11. The method of claim 6, wherein the forming of the white layer (540) comprises printing a white ink on the color layer (530) by screen printing or digital printing.

12. The method of claim 9, wherein the forming of the second transparent layer (550) comprises printing a transparent ink on the color layer (530) by screen printing or digital printing.

## Patentansprüche

1. Haushaltsgerät (1, 2, 3, 4), umfassend:
einen Hauptkörper (10, 20, 30, 40); und
eine Tür (100, 200, 300, 400) zum Öffnen und Schließen des Hauptkörpers (10, 20, 30, 40),
wobei eine Farbtafel (500) in mindestens einem von dem Hauptkörper (10, 20, 30, 40) und der Tür (100, 200, 300, 400) enthalten ist, wobei die Farbtafel (500) Folgendes umfasst:
ein transparentes Substrat (510), das auf einer Vorderseite der Farbtafel (500) angeordnet ist;
eine Farbschicht (530), die eine Farbe aufweist und auf einer Rückseite des transparenten Substrats (510) angeordnet ist, so dass die Farbe durch das transparente Substrat (510) sichtbar ist;
eine transparente Schicht (520), die zwischen der Farbschicht (530) und dem transparenten Substrat (510) angeordnet ist, um eine Vorderseite der Farbschicht (530) an der Rückseite des Substrats (510) zu kleben;
eine weiße Schicht (540), die auf einer Rückseite der Farbschicht (530) angeordnet ist, um eine Hintergrundfarbe für die Farbschicht (530) bereitzustellen, und
eine Abdeckungsschicht (560), die direkt auf einer Rückseite der weißen Schicht (540) angeordnet ist, wobei die Abdeckungsschicht (560) eine weiße oder eine graue Farbe aufweist.

2. Haushaltsgerät (1, 2, 3, 4) nach Anspruch 1, ferner umfassend
eine zweite transparente Schicht (550), die so konfiguriert ist, dass sie eine Veränderung der Farbe der Farbschicht (530) verhindert, wobei die transparente Schicht (520) eine erste transparente Schicht (520) ist und die zweite transparente Schicht (550) zwischen der Farbschicht (530) und der weißen Schicht (540) angeordnet ist.

3. Haushaltsgerät (1, 2, 3, 4) nach Anspruch 1, wobei die Farbschicht (530) durch Digitaldruck gebildet ist.

4. Haushaltsgerät (1, 2, 3, 4) nach Anspruch 1, wobei die Farbschicht (530) eine Tinte umfasst, die aus einer Tintenstrahldruckvorrichtung ausgestoßen wird.

5. Haushaltsgerät (1, 2, 3, 4) nach Anspruch 4, wobei die Farbschicht (530) eine Tinte umfasst, die aus einer Tintenstrahldruckvorrichtung ausgestoßen und durch UV-Licht ausgehärtet wird.

6. Verfahren zur Herstellung einer Farbtafel (500), wobei das Verfahren Folgendes umfasst:
Empfangen von Farbinformationen;
Bilden einer Farbschicht (530) durch Digitaldruck auf der Grundlage der Farbinformationen, wobei die Farbschicht eine Farbe aufweist und auf einer transparenten Schicht (520) angeordnet ist, welche auf einer Oberfläche eines transparenten Substrats (510) gebildet wurde;
Bilden einer weißen Schicht (540) auf der Farbschicht (530), wobei die weiße Schicht (540) eine Hintergrundfarbe für die Farbschicht (530) bereitstellt, und
Bilden einer Abdeckungsschicht (560) mit einer weißen oder grauen Farbe direkt auf der weißen Schicht (540).

7. Verfahren nach Anspruch 6, wobei das Bilden der Farbschicht (530) Drucken einer den Farbinformationen entsprechenden Farbe auf die erste transparente Schicht (520) unter Verwendung einer Digitaldruckvorrichtung (600) umfasst.

8. Verfahren nach Anspruch 7, wobei die Digitaldruckvorrichtung (600) mindestens eine von einer Tintenstrahldruckvorrichtung und einer Laserdruckvorrichtung umfasst.

9. Verfahren nach Anspruch 6, ferner umfassend Bilden einer zweiten transparenten Schicht (550) auf der Farbschicht (530), wobei die transparente Schicht (520) eine erste transparente Schicht (520) ist und die zweite transparente Schicht (550) so konfiguriert ist, dass sie eine Veränderung der Farbe der Farbschicht (530) verhindert,
wobei die weiße Schicht (540) auf der zweiten transparenten Schicht (550) gebildet wird.

10. Verfahren nach Anspruch 6, ferner umfassend Bilden der transparenten Schicht (520) auf dem transparenten Substrat (510), wobei die transparente Schicht (520) die Farbschicht (530) an dem transparenten Substrat (510) klebt.

11. Verfahren nach Anspruch 6, wobei das Bilden der weißen Schicht (540) Drucken einer weißen Tinte auf die Farbschicht (530) durch Siebdruck oder Digitaldruck umfasst.

12. Verfahren nach Anspruch 9, wobei das Bilden der zweiten transparenten Schicht (550) Drucken einer transparenten Tinte auf die Farbschicht (530) durch Siebdruck oder Digitaldruck umfasst.

## Revendications

1. Appareil domestique (1, 2, 3, 4) comprenant :
un corps principal (10, 20, 30, 40) ; et
une porte (100, 200, 300, 400) pour ouvrir et fermer le corps principal (10, 20, 30, 40),
dans lequel un panneau coloré (500) compris dans au moins l'un parmi le corps principal (10, 20, 30, 40) et la porte (100, 200, 300, 400), le panneau coloré (500) comprenant :
un substrat transparent (510) disposé sur un côté avant du panneau coloré (500) ;
une couche colorée (530) ayant une couleur et disposée sur un côté arrière du substrat transparent (510) de sorte que la couleur soit visible à travers le substrat transparent (510) ;
une couche transparente (520) disposée entre la couche colorée (530) et le substrat transparent (510) pour faire adhérer un côté avant de la couche colorée (530) au côté arrière du substrat (510) ;
une couche blanche (540) disposée sur un côté arrière de la couche colorée (530) pour fournir une couleur de fond pour la couche colorée (530), et
une couche de masquage (560) directement disposée sur un côté arrière de la couche blanche (540), dans lequel la couche de masquage (560) a une couleur blanche ou une couleur grise.

2. Appareil domestique (1, 2, 3, 4) selon la revendication 1, comprenant en outre
une deuxième couche transparente (550) configurée pour empêcher la couleur de la couche colorée (530) de changer, dans lequel la couche transparente (520) est une première couche transparente (520) et la deuxième couche transparente (550) est disposée entre la couche colorée (530) et la couche blanche (540).

3. Appareil domestique (1, 2, 3, 4) selon la revendication 1, dans lequel la couche colorée (530) est formée par impression numérique.

4. Appareil domestique (1, 2, 3, 4) selon la revendication 1, dans lequel la couche colorée (530) comprend une encre éjectée depuis un dispositif d'impression à jet d'encre.

5. Appareil domestique (1, 2, 3, 4) selon la revendication 4, dans lequel la couche colorée (530) comprend une encre éjectée depuis un dispositif d'impression à jet d'encre et durcie par lumière UV.

6. Procédé de fabrication d'un panneau coloré (500), le procédé comprenant :
la réception d'informations de couleur ;
la formation d'une couche colorée (530) ayant une couleur et disposée sur une couche transparente (520) formée sur une surface d'un substrat transparent (510) par impression numérique sur la base des informations de couleur ;
la formation d'une couche blanche (540) sur la couche colorée (530), la couche blanche (540) fournissant une couleur de fond pour la couche colorée (530), et
la formation d'une couche de masquage (560) ayant une couleur blanche ou une couleur grise directement sur la couche blanche (540).

7. Procédé selon la revendication 6, dans lequel la formation de la couche colorée (530) comprend l'impression d'une couleur correspondant aux informations de couleur sur la première couche transparente (520) en utilisant un dispositif d'impression numérique (600).

8. Procédé selon la revendication 7, dans lequel le dispositif d'impression numérique (600) comprend au moins l'un parmi un dispositif d'impression à jet d'encre et un dispositif d'impression laser.

9. Procédé selon la revendication 6, comprenant en outre la formation d'une deuxième couche transparente (550) sur la couche colorée (530), dans lequel la couche transparente (520) est une première couche transparente (520) et la deuxième couche transparente (550) est configurée pour empêcher la couleur de la couche colorée (530) de changer,
dans lequel la couche blanche (540) est formée sur la deuxième couche transparente (550).

10. Procédé selon la revendication 6, comprenant en outre la formation de la couche transparente (520) sur le substrat transparent (510), la couche transparente (520) faisant adhérer la couche colorée (530) au substrat transparent (510).

11. Procédé selon la revendication 6, dans lequel la formation de la couche blanche (540) comprend l'impression d'une encre blanche sur la couche colorée (530) par sérigraphie ou impression numérique.

12. Procédé selon la revendication 9, dans lequel la formation de la deuxième couche transparente (550) comprend l'impression d'une encre transparente sur la couche colorée (530) par sérigraphie ou impression numérique.
